# EUROPÄISCHE PATENTSCHRIFT

(11) **EP 1 004 860 B1**
(45) Veröffentlichungstag und Bekanntmachung des Hinweises auf die Patenterteilung: **26.07.2006**
(21) Anmeldenummer: 99122987.3
(22) Anmeldetag: 19.11.1999
(51) Int. Cl.: G01G 23/00, H02J 9/00

(54) **Elektronische Waage mit Standby-Betriebszustand**
Electronic scale with standby operation
Balance electronique avec foncionnement en mode veille

(30) Priorität: 23.11.1998 DE 19853892
(43) Veröffentlichungstag der Anmeldung: 31.05.2000
(73) Patentinhaber: SARTORIUS AG, 37075 Göttingen (DE)
(72) Erfinder: Oldendorf, Christian, 37077 Göttingen (DE); Berg, Christoph, 37077 Göttingen (DE); Maaz, Günther, 37170 Uslar 1 (DE)

(56) Entgegenhaltungen:
- WO-A-98/48498
- DE-A- 2 922 848

## Beschreibung

Die Erfindung bezieht sich auf eine elektronische Waage mit einer digitalen Signalverarbeitungseinheit, mit einer netzgespeisten Spannungsversorgung, bestehend aus einem Transformator und einem nachgeschalteten Gleichrichter mit Ladekondensator, mit einem Netzschalter zwischen dem Transformator und dem Netzanschluß und mit mindestens zwei Betriebszuständen, wobei im Normalbetriebszustand alle elektronischen Bauelemente mit Spannung versorgt werden und im Standby-Betriebszustand die wesentlichen wärmeerzeugenden Bauelemente eingeschaltet sind, während alterungsempfindliche Bauelemente und die Anzeige ausgeschaltet sind.

Waagen dieser Art sind z.B. aus der DE 29 22 848 C2 bekannt. Der Standby-Betriebszustand dient dabei dazu, die Temperaturverteilung in der Waage, die sich im Normalbetriebszustand einstellt, näherungsweise auch dann aufrechtzuerhalten, wenn alterungsempfindliche Bauelemente und die Anzeige ausgeschaltet sind. Dies dient dazu, daß nach dem Umschalten vom Standby-Betriebszustand in den Normalbetriebszustand die Waage sofort mit voller Genauigkeit arbeitet und keine Abweichungen aufgrund deutlich anderer Temperaturverteilung innerhalb der Waage auftreten. Nachteilig an diesem Stand der Technik ist der Energieverbrauch während des Standby-Betriebszustandes, der zwar nicht hoch ist, sich jedoch wegen der langen Zeitdauer, in der die Waage üblicherweise im Standby-Betriebszustand betrieben wird, zu merklichen Werten aufsummiert.

Zur Senkung des Energieverbrauchs von elektronischen Geräten ist es aus der WO-A-98/48 498 bekannt, das Gerät getaktet ein- und auszuschalten: im full power mode ist das Gerät dauernd eingeschaltet, in einem standby mode ist es nur 50% der Taktzeit eingeschaltet und bleibt die restlichen 50% der Taktzeit ausgeschaltet und in einem sleep mode zur stärkeren Energieeinsparung ist es nur 25% der Taktzeit eingeschaltet und bleibt die restlichen 75% der Taktzeit ausgeschaltet. Diese Methode ist bei Waagen jedoch nachteilig, da in diesem standby mode durch die Taktung aller elektronischen Bauelemente nur 50% der Wärme des Normalzustandes erzeugt wird. Beim Übergang von diesem standby mode in den full power mode ergibt sich dadurch eine Temperaturänderung innerhalb der Waage, die zu einem Genauigkeitsverlust während der ersten Zeit nach der Umschaltung führt. Außerdem führt für viele elektronische Bauelemente das dauernde Ein- und Ausschalten beim standby mode und beim sleep mode zu einer Verringerung der Lebensdauer, da durch die wechselnden Temperaturgradienten wechselnde mechanische Spannungen in den Gehäusen und Kontaktstellen erzeugt werden, was zu einer schnelleren Alterung führt.

Aufgabe der Erfindung ist es daher, den Energieverbrauch elektronischer Waagen der eingangs genannten Art zu senken, ohne dadurch andere Nachteile in Kauf nehmen zu müssen.

Erfindungsgemäß wird dies dadurch erreicht, daß der Netzschalter ein elektrisch betätigbarer Schalter ist, daß eine separate, von der netzgespeisten Spannungsversorgung unabhängige Spannungsversorgung vorhanden ist, die zumindest einen Uhrenbaustein mit Spannung versorgt, daß der Netzschalter über eine Leitung mit dem Uhrenbaustein verbunden ist, daß neben dem Normalbetriebszustand und dem Standby-Zustand ein weiterer, Sleep-Mode genannter Betriebszustand vorgesehen ist, zu dessen Erreichen der Uhrenbaustein über die Leitung einen Ausschaltimpuls auf den Netzschalter gibt, so daß die gesamte Elektronik, mit Ausnahme des Uhrenbausteins, während des Sleep-Modes keine Versorgungsspannung mehr erhält, und daß nach Ablauf einer vorgegebenen Zeit oder zu einer vorgegebenen Uhrzeit der Uhrenbaustein einen Impuls auf die Leitung gibt und den Netzschalter wieder einschaltet und daß die digitale Verarbeitungseinheit nach dem Einschalten der Versorgungsspannung in den Normalbetriebszustand oder den Standby-Betriebszustand umschaltet.

Während des Sleep-Modes wird die normale Elektronik der Waage also vollständig vom Netz getrennt und durch die separate Spannungsversorgung wird nur eine "Minimalelektronik" in Form eines Uhrenbausteins funktionsfähig gehalten, damit die normale netzgespeiste Spannungsversorgung nach Ablauf der vorgebbaren Zeit bzw. zu der vorgebbaren Uhrzeit selbsttätig wieder eingeschaltet werden kann. Die Erfindung macht sich dabei die Tatsache zunutze, daß die meisten elektronischen Waagen in einem festen Zeitrhythmus betrieben werden. Es reicht dann, z.B. 1,5 Stunden vor dem üblichen Arbeitsbeginn mit der Waage den Sleep-Mode zu beenden und z.B. in den Standby-Betriebszustand umzuschalten, damit die Waage zu Arbeitsbeginn ihren thermischen Gleichgewichtszustand und damit ihre volle Genauigkeit erreicht hat. Die separate Spannungsversorgung kann vorteilhafterweise entweder aus einem aufladbaren Energiespeicher (aufladbare Batterie oder Kondensator hoher Kapazität) oder aus einer Gleichrichterschaltung mit Ladekondensator bestehen, die über zwei Kondensatoren direkt an die beiden Pole des Netzanschlusses angeschlossen ist. Vorteilhafte Ausgestaltungen und Weiterbildungen ergeben sich aus den abhängigen Ansprüchen.

Die Erfindung wird im folgenden anhand der schematischen Figuren beschrieben. Dabei zeigt:
- Fig. 1: ein Blockschaltbild der Waage in einer ersten Ausgestaltung und
- Fig. 2: ein Blockschaltbild der Waage in einer zweiten Ausgestaltung.

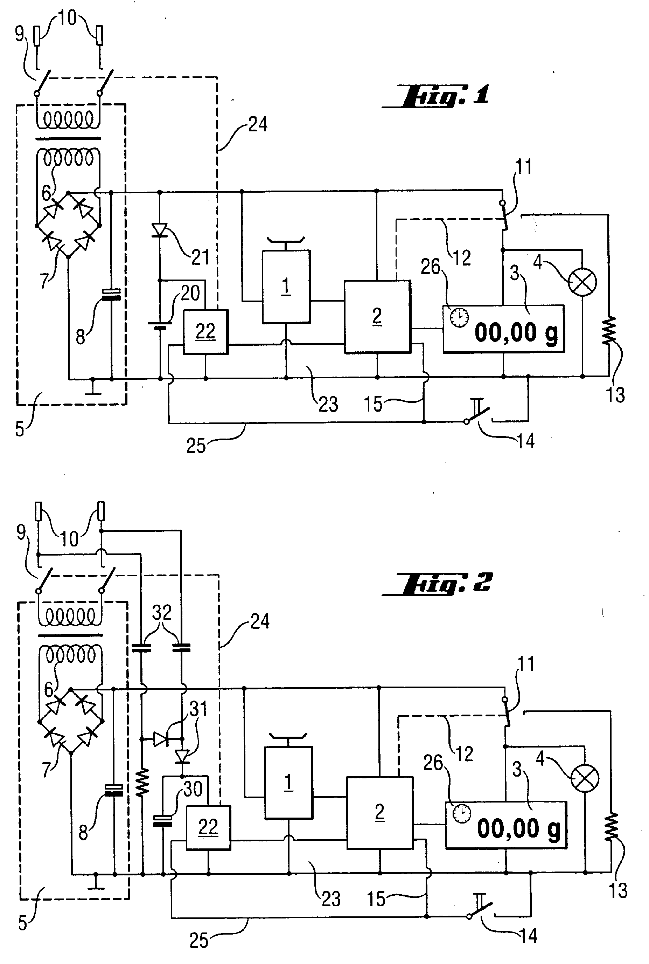

Die elektronische Waage in Fig. 1 besteht aus einem Wägesystem 1, einer digitalen Signalverarbeitungseinheit 2, die üblicherweise einen Mikroprozessor als Hauptelement enthält, und einer Anzeige 3 mit Hinterleuchtung (angedeutet durch die Glühlampe 4). Die Spannungsversorgung der Waage erfolgt durch ein Netzteil 5, das aus einem Transformator 6, einem nachgeschalteten Gleichrichter 7 und einem Ladekondensator 8 besteht. Dem Ladekondensator 8 kann eine übliche Schaltung zur Spannungsstabilisation nachgeschaltet sein (nicht gezeichnet). Das Netzteil (Spannungsversorgung) 5 ist über einen Netzschalter 9 und über Steckkontakte (Netzanschluß) 10 mit dem Wechselspannungsnetz verbunden. Weiter weist die Waage einen Schalter 11 auf, der im Normalbetriebszustand (wie gezeichnet) die Anzeige 3 und die Hinterleuchtung (Glühlampe) 4 (und eventuell vorhandene andere, in der Fig. nicht eingezeichnete alterungsempfindliche Bauelemente) mit Spannung versorgt. Im Standby-Betriebszustand wird der Schalter 11 über die Leitung 12 von der digitalen Signalverarbeitungselektronik 2 umgeschaltet und statt der Anzeige 3 und der Hinterleuchtung 4 etc. wird ein Ersatzverbraucher 13 an die Versorgungsspannung angeschlossen, der etwa genauso viel Wärme erzeugt wie die abgeschalteten Verbraucher, jedoch keine Alterung zeigt. Dadurch bleibt im Standby-Betriebszustand das thermische Gleichgewicht innerhalb der Waage erhalten. Der Bediener der Waage veranlaßt die Umschaltung vom Normalbetriebszustand in den Standby-Betriebszustand und umgekehrt durch Betätigen des Tasters 14, der z.B. mit "Ein/Aus" beschriftet ist und der über die Verbindungsleitung 15 mit der digitalen Signalverarbeitungseinheit 2 verbunden ist. Der Netzschalter 9 bleibt sowohl im Normalbetriebszustand als auch im Standby-Betriebszustand geschlossen. - Die bisher beschriebenen Teile der Waage und ihre Funktion sind allgemein bekannt und daher im vorstehenden nur ganz kurz erläutert.

Die erfindungsgemäße Waage weist nun zusätzlich eine separate Spannungsversorgung in Form eines aufladbaren Energiespeichers 20 auf, der in Fig. 1 als wiederaufladbare Batterie gezeichnet ist, der aber auch ein Kondensator hoher Kapazität sein kann. Der Energiespeicher 20 wird über eine Ladeschaltung 21 (in Fig. 1 vereinfachend als Diode gezeichnet) sowohl im Normalbetriebszustand als auch im Standby-Betriebszustand dauernd aufgeladen bzw. geladen gehalten. Der separate Energiespeicher 20 versorgt einen Uhrenbaustein 22 mit Spannung. Unter Uhrenbaustein wird dabei sowohl ein Baustein verstanden, der intern die Uhrzeit gespeichert hat und diese dauernd aktualisiert, als auch ein Baustein, der wie eine Stoppuhr eine vorgegebene Zeitspanne bis auf Null zurückzählen kann. Der Uhrenbaustein 22 kann mit der digitalen Signalverarbeitungseinheit 2 über die Leitung 23 Daten austauschen, beispielsweise kann die digitale Signalverarbeitungseinheit 2 eine "Weckzeit" in den Uhrenbaustein einspeichern oder eine Zeitspanne, nach deren Ablauf der "Weckimpuls" ausgelöst werden soll. Sobald eine Uhrzeit für den bzw. eine Zeitspanne bis zum Weckimpuls von der digitalen Signalverarbeitungseinheit 2 in den Uhrenbaustein 22 eingespeichert worden ist, gibt der Uhrenbaustein 22 über die Leitung 24 einen Ausschaltimpuls auf den Netzschalter 9, so daß die gesamte Elektronik - mit Ausnahme des Uhrenbausteins 22 - keine Versorgungsspannung mehr erhält. Dieser Sleep-Mode genannte neue Betriebszustand bleibt bestehen, bis die vorgegebene Zeitspanne abgelaufen ist bzw. bis die vorgegebene Uhrzeit erreicht ist und der Uhrenbaustein 22 einen Impuls auf die Leitung 24 gibt und den Netzschalter 9 wieder einschaltet. Dadurch erhält die digitale Signalverarbeitungseinheit 2 wieder ihre Versorgungsspannung und beginnt zu arbeiten. Dabei ist die digitale Signalverarbeitungseinheit 2 vorteilhafterweise so programmiert, daß sie nach dem Einschalten der Versorgungsspannung in den Standby-Zustand geht. - Der Netzschalter 9 ist gemäß der eben beschriebenen Funktionsweise ein bistabiler Schalter, der durch einen Strom-/Spannungsimpuls jeweils in seinen anderen Schaltzustand gebracht wird und diesen Schaltzustand ohne Energiezufuhr beibehält.

Die Kapazität des Energiespeichers 20 ist dabei vorteilhafterweise so bemessen, daß der Uhrenbaustein 22 ca. 24 Stunden betrieben werden kann, ohne daß eine Nachladung erforderlich ist. Dadurch ist bei allen Waagen, die jeden Tag mindestens einmal benutzt werden, die Funktionsfähigkeit des Uhrenbausteines 22 bis zum nächsten Tag sichergestellt.

Die gewünschte Einschaltzeit kann der Bediener der Waage beispielsweise in einem Menü fest vorgeben. Bei täglicher gleicher Arbeitszeit programmiert der Bediener einen Zeitpunkt ein, der 1...2 Stunden vor Arbeitsbeginn liegt. Zu diesem Zeitpunkt schaltet die Waage dann vom oben beschriebenen Sleep-Mode in den Standby-Betriebszustand um und innerhalb der 1...2 Stunden stellt sich das thermische Gleichgewicht innerhalb der Waage ein. Die Waage kann damit zu Arbeitsbeginn in den Normalbetriebszustand umgeschaltet werden und steht sofort mit ihrer vollen Genauigkeit zur Verfügung.

Statt der Vorgabe des Umschaltzeitpunktes per Menü ist es auch möglich, daß in der digitalen Signalverarbeitungseinheit ein Detektor vorhanden ist, der Ruhe- und Arbeitsphasen der Waage erkennt und deren zeitliche Abfolge abspeichert. Aus diesen abgespeicherten Daten können dann zukünftige Ruhe- und Arbeitsphasen extrapoliert werden und die digitale Signalverarbeitungseinheit 2 setzt dann den Zeitpunkt für die Umschaltung vom Sleep-Mode in den Standby-Betriebszustand 1...2 Stunden vor dem extrapolierten Arbeitsbeginn fest. - Auf diese Weise ist eine selbsttätige Anpassung an sich allmählich verändernde Arbeitszeiten möglich.

Die Ladeschaltung 21 für den separaten Energiespeicher 20 ist zweckmäßigerweise so dimensioniert, daß der Energiespeicher nach ca. 2 Stunden wieder voll aufgeladen ist. Die Vorlaufzeit von 1...2 Stunden zum Erreichen des thermischen Gleichgewichtes innerhalb der Waage reicht dann zusammen mit einer minimalen Zeit im Normalbetriebszustand aus, um die Vollaufladung des Energiespeichers 20 sicherzustellen.

Die Umschaltung zwischen den verschiedenen Betriebszuständen erfolgt - mit Ausnahme des beschriebenen selbsttätigen Überganges vom Sleep-Mode in den Standby-Betriebszustand - mittels des Tasters 14 durch den Bediener der Waage:
Bei jedem normalen, kurzen Betätigen des Tasters 14 schaltet die Waage zwischen dem Normalbetriebszustand und dem Standby-Betriebszustand hin und her. Wird der Taster 14 lange gedrückt, so quittiert die digitale Signalverarbeitungseinheit 2 diesen Befehl z.B. durch das kurze Aufleuchten eines Uhrensymbols 26 in der Anzeige 3 oder durch die Anzeige der gespeicherten "Weckzeit" und schaltet dann in den Sleep-Mode um. - Ist in der digitalen Signalverarbeitungseinheit 2 ein Zeitpunkt für das automatische Umschalten vom Sleep-Mode in den Standby-Betriebszustand abgespeichert, so kann die digitale Signalverarbeitungseinheit 2 auch von sich aus den Sleep-Mode einschalten, falls die Waage längere Zeit - z.B. eine Stunde - im Standby-Betriebszustand war.

Befindet sich die Waage im Sleep-Mode, so reagiert die digitale Signalverarbeitungseinheit 2 auf Betätigen des Tasters ja nicht; um die Waage vom Sleep-Mode von Hand wieder in den Normalbetriebszustand umschalten zu können, ist der Taster 14 über die Leitung 25 auch mit dem Uhrenbaustein 22 verbunden. Ein Betätigen des Tasters 14 während des Sleep-Modes veranlaßt dadurch den Uhrenbaustein 22, einen Impuls auf die Leitung 24 zu geben und die Waage dadurch in den Standby-Betriebszustand umzuschalten. Das fehlende thermische Gleichgewicht innerhalb der Waage wird dabei zweckmäßigerweise z.B. durch das Blinken des schon erwähnten Uhrensymbols 26 in der Anzeige 3 der Bedienungsperson signalisiert. Nach Erreichen des thermischen Gleichgewichts - also nach etwa 1 Stunde - erlischt dieser Warnhinweis. - Die Einstellung des thermischen Gleichgewichts läßt sich vorteilhafterweise dadurch beschleunigen, daß in der ersten Zeit zusätzlich zum Ersatzverbraucher 13 weitere Ersatzverbraucher eingeschaltet werden, oder daß sowohl der Ersatzverbraucher 13 als auch die Anzeige 3 und die Hinterleuchtung 4 eingeschaltet werden.

Das Umschalten in den Sleep-Mode durch langes Drücken des Tasters 14 kann auch zum Einstellen der Wiedereinschaltzeit dienen: Solange der Taster 14 gedrückt gehalten wird, erscheint in der Anzeige 3 eine Zeitanzeige - beispielsweise beginnend mit der aktuellen Uhrzeit -, die schrittweise vorgestellt wird. Beim Erreichen der gewünschten Wiedereinschaltzeit läßt der Bediener die Taste 14 los und diese Zeit wird als Wiedereinschaltzeit abgespeichert. - Dasselbe gilt sinngemäß für das Abspeichern einer Zeitdauer bis zum Wiedereinschalten.

Der Uhrenbaustein 22 beinhaltet vorteilhafterweise zusätzlich eine Spannungsüberwachungsschaltung: Diese überwacht im Sleep-Mode die Spannung des Energiespeichers 20 und gibt einen Impuls auf der Leitung 24 ab, falls die Spannung des Energiespeichers 20 unter einen vorgegebenen Grenzwert sinkt. Dadurch wird der Netzschalter 9 eingeschaltet und der Energiespeicher 20 wieder aufgeladen. Nach einer vorgegebenen Zeit - der Aufladezeit für den Energiespeicher 20 - gibt der Uhrenbaustein 22 nochmal einen Impuls auf die Leitung 24 und schaltet dadurch den Netzschalter 9 wieder aus, falls inzwischen die eingestellte Wiedereinschaltzeit noch nicht erreicht ist. - Auch bei einer längeren Trennung der Waage vom Netz sorgt die Spannungsüberwachungsschaltung dafür, daß die Waage nach dem erneuten Anschluß an das Netz wieder im Standby-Betriebszustand ist: Wird die Waage im Sleep-Mode vom Netz getrennt, so verbleibt sie im Sleep-Mode, bis die Spannungsüberwachungsschaltung das Unterschreiten des vorgegebenen Grenzwertes für die Spannung des Energiespeichers 20 detektiert und den Netzschalter 9 einschaltet. Dies führt zwar zu keiner Aufladung des Energiespeichers 20, sorgt aber dafür, daß beim Wiederanschließen an das Netz der Netzschalter 9 eingeschaltet ist und die Waage über die normale Spannungsversorgung 5 in Betrieb geht. Da die Spannungsüberwachungsschaltung nur im Sleep-Mode aktiviert ist, wird beim Trennen vom Netz im Standby-Betriebszustand oder im Normalbetriebszustand und anschließendem Spannungsabfall am Energiespeicher 20 kein Umschaltimpuls auf den Netzschalter 9 gegeben und dieser verbleibt eingeschaltet.

In einer anderen vorteilhaften Weiterbildung enthält der Uhrenbaustein 22 einen Funkuhr-Empfänger, so daß die interne Uhrzeit immer exakt ist und die Sommer-/Winterzeit-Umstellung automatisch erfolgt.

Falls die digitale Signalverarbeitungseinheit 2 einen Mikroprozessor enthält, dessen Stromverbrauch genügend gering ist, kann selbstverständlich der Uhrenbaustein 22 Bestandteil dieses Mikroprozessors sein und der ganze Mikroprozessor während des Sleep-Modes in einem Standby-Zustand gehalten werden. Trotzdem ergibt sich während des Sleep-Modes eine Verringerung des Energieverbrauchs gegenüber dem Standby-Betriebszustand, da die weiteren elektronischen Komponenten der digitalen Signalverarbeitungseinheit 2 und des Wägeaufnehmers 1, der Ersatzverbraucher 13 und das Netzteil 5 keine Energie aufnehmen.

Insgesamt ergibt sich durch die erfindungsgemäße Schaltung und durch die Einführung des Sleep-Modes als weiterem Betriebszustand eine deutliche Verringerung der verbrauchten Energie: Der volle Energieverbrauch, der gemäß dem Stand der Technik nicht nur im Normalbetriebszustand sondern wegen des Ersatzverbrauchers auch im Standby-Betriebszustand benötigt wird, wird gemäß der Erfindung nur während des Normalbetriebszustandes und während einer davorliegenden Anwärmzeit von ca. 1...2 Stunden benötigt. In der übrigen Zeit sind fast alle Verbraucher, einschließlich des Transformators und des Netzteils, abgeschaltet und es wird keinerlei Netzenergie aufgenommen. Die Einschaltbarkeit von Hand wird nur durch den Betrieb des Uhrenbausteins 22 aufrechterhalten, der auch für das Umschalten zur vorgegebenen Zeit in den Standby-Betriebszustand sorgt. Dieser Uhrenbaustein wird von einem separaten, aufladbaren Energiespeicher betrieben. Dieser Energiespeicher muß zwar während des Normalbetriebszustandes und des Standby-Betriebszustandes aufgeladen werden, so daß der Energieverbrauch des Uhrenbausteins 22 dem Wechselspannungsnetz entnommen werden muß. Es fallen jedoch die gesamten Energieverluste vom Transformator, Netzteil etc. während des Sleep-Modes fort.

Das Blockschaltbild einer zweiten Ausgestaltung der Waage ist in Fig. 2 gezeigt. Die Bauteile 1...15 und 22...26 sind mit den entsprechenden Bauteilen aus Fig. 1 identisch und werden daher nicht nochmal erläutert. Als separate, von der normalen Spannungsversorgung 5 unabhängige Spannungsversorgung ist in Fig. 2 eine Gleichrichterschaltung 31 mit einem gesonderten Ladekondensator 30 vorgesehen, die über die beiden Kondensatoren 32 direkt mit den beiden Polen des Netzanschlusses 10 verbunden ist. Die beiden Kondensatoren 32 sorgen dafür, daß das Massepotential der Schaltung vom Potential der Netzversorgung getrennt ist. Eine Spannungsstabilisationsschaltung hinter dem Ladekondensator ist möglich, falls der Uhrenbaustein 22 dies erfordert, in Fig. 2 der Übersichtlichkeit halber jedoch nicht eingezeichnet.

Diese primitive Schaltung ohne Transformator hat zwar keinen guten Wirkungsgrad, aufgrund des sehr geringen Strombedarfs des Uhrenbausteins 22 von unter 1 mA sind die Verluste dieser Schaltung trotzdem geringer als die Verluste des Netzteiles 5, das ja für eine deutlich höhere Nennleistung dimensioniert ist. Der für das Umschalten des Netzschalters 9 kurzzeitig benötigte höhere Strom wird dabei durch das Speichervermögen des Ladekondensators 30 aufgebracht. - Ansonsten ist die Funktionsweise dieser Schaltung identisch mit der schon beschriebenen Funktionsweise der Schaltung gemäß Fig. 1. Die Leistungsaufnahme dieser Schaltung ist im Sleep-Mode zwar nicht ganz Null, aber bei entsprechender Technologie für den Uhrenbaustein 22 jedoch sehr gering und deutlich niedriger als im Standby-Betriebszustand.

## Patentansprüche

1. Elektronische Waage, mit einer digitalen Signalverarbeitungseinheit (2), mit einer netzgespeisten Spannungsversorgung (5) bestehend aus einem Transformator (6) und einem nachgeschalteten Gleichrichter (7) mit Ladekondensator (8), mit einem Netzschalter (9) zwischen dem Transformator (6) und dem Netzanschluß (10) und mit mindestens zwei Betriebszuständen, wobei im Normalbetriebszustand alle elektronischen Bauelemente mit Spannung versorgt werden und im Standby-Betriebszustand die wesentlichen wärmeerzeugenden Bauelemente eingeschaltet sind, während alterungsempfindliche Bauelemente und die Anzeige (3) ausgeschaltet sind, **dadurch gekennzeichnet, daß** der Netzschalter (9) ein elektrisch betätigbarer Schalter ist, daß eine separate, von der netzgespeisten Spannungsversorgung (5) unabhängige Spannungsversorgung (20, 30) vorhanden ist, die zumindest einen Uhrenbaustein (22) mit Spannung versorgt, daß der Netzschalter (9) über eine Leitung (24) mit dem Uhrenbaustein (22) verbunden ist, daß neben dem Normalbetriebszustand und dem Standby-Zustand ein weiterer, Sleep-Mode genannter Betriebszustand vorgesehen ist, zu dessen Erreichen der Uhrenbaustein (22) über die Leitung (24) einen Ausschaltimpuls auf den Netzschalter (9) gibt, so daß die gesamte Elektronik, mit Ausnahme des Uhrenbausteins (22), während des Sleep-Modes keine Versorgungsspannung mehr erhält, und daß nach Ablauf einer vorgegebenen Zeit oder zu einer vorgegebenen Uhrzeit der Uhrenbaustein (22) einen Impuls auf die Leitung (24) gibt und den Netzschalter (9) wieder einschaltet und daß die digitale Verarbeitungseinheit (2) nach dem Einschalten der Versorgungsspannung in den Normalbetriebszustand oder den Standby-Betriebszustand umschaltet.

2. Elektronische Waage nach Anspruch 1, **dadurch gekennzeichnet, daß** die separate Spannungsversorgung ein aufladbarer Energiespeicher (20) ist.

3. Elektronische Waage nach Anspruch 2, **dadurch gekennzeichnet, daß** der aufladbare Energiespeicher (20) ein Kondensator hoher Kapazität ist.

4. Elektronische Waage nach Anspruch 2, **dadurch gekennzeichnet, daß** der aufladbare Energiespeicher (20) eine aufladbare Batterie ist.

5. Elektronische Waage nach einem der Ansprüche 2 bis 4, **dadurch gekennzeichnet, daß** der aufladbare Energiespeicher (20) sowohl während des Normalbetriebszustandes als auch während des Standby-Betriebszustandes von der netzgespeisten Spannungsversorgung (5) aufgeladen wird.

6. Elektronische Waage nach einem der Ansprüche 2 bis 5, **dadurch gekennzeichnet, daß** vom separaten Energiespeicher (20) zusätzlich eine Spannungsüberwachungsschaltung versorgt wird, die den Ladezustand des aufladbaren Energiespeichers (20) überwacht und daß der weitere Betriebszustand zumindest solange unterbrochen wird, bis der aufladbare Energiespeicher (20) wieder genügend geladen ist.

7. Elektronische Waage nach Anspruch 1, **dadurch gekennzeichnet, daß** die separate Spannungsversorgung aus einer Gleichrichterschaltung (31) mit Ladekondensator (30) besteht, die über zwei Kondensatoren (32) an die beiden Pole des Netzanschlusses (10) angeschlossen ist.

8. Elektronische Waage nach einem der Ansprüche 1 bis 7, **dadurch gekennzeichnet, daß** der Netzschalter (9) ein bistabiler Schalter ist.

9. Elektronische Waage nach einem der Ansprüche 1 bis 8, **dadurch gekennzeichnet, daß** der Uhrenbaustein (22) einen Funkuhr-Empfänger enthält.

10. Elektronische Waage nach einem der Ansprüche 1 bis 9, **dadurch gekennzeichnet, daß** der Uhrenbaustein (22) Teil eines Mikroprozessors ist.

11. Elektronische Waage nach einem der Ansprüche 1 bis 10, **dadurch gekennzeichnet, daß** die Uhrzeit zur selbsttätigen Beendigung des weiteren Betriebszustandes per Menü vorgegeben werden kann.

12. Elektronische Waage nach einem der Ansprüche 1 bis 11, **dadurch gekennzeichnet, daß** innerhalb einer digitalen Signalverarbeitungseinheit (2) ein Detektor vorhanden ist, der Ruhephasen der Waage erkennt, daß Speichermittel vorhanden sind, die die Zeitdauer der Ruhephasen und der Arbeitsphasen speichern, daß Rechenprogramme vorhanden sind, die aus den gespeicherten Ruhe- und Arbeitsphasen die zukünftigen Ruhe- und Arbeitsphasen extrapolieren und daß vor Beginn einer zu erwartenden Arbeitsphase der weitere Betriebszustand selbsttätig beendet wird und der Standby-Betriebszustand eingeschaltet wird.

## Claims

1. Electronic weighing machine comprising a digital signal processing unit (2), a mains-fed voltage supply (5) consisting of a transformer (6) and a downstream rectifier (7) with charging capacitor (8), a mains switch (9) between the transformer (6) and the mains connection (10) and at least two operating states, wherein in the normal operating state all electronic components are supplied with voltage and in the standby operating state the essential heat-generating components are switched on, whilst ageing-sensitive components and the display (3) are switched off, **characterised in that** the mains switch (9) is an electrically actuable switch, that a separate voltage supply (20, 30), which is independent of the mains-fed voltage supply (5) and which supplies at least a clock module (22) with voltage, is present, that the mains switch (9) is connected with the clock module (22) by way of a conductor (24), that apart from the normal operating state and the standby state a further operating state is provided, which is termed sleep mode and for attainment of which the clock module (22) issues a switch-off pulse to the mains switch (9) by way of the conductor (24) so that the entire electronic system with the exception of the clock module (22) no longer receives voltage supply during the sleep mode and that after expiry of a predetermined time or at a predetermined clock time the clock module (22) gives a pulse to the conductor (24) and switches the main switch (9) back on and that the digital processing unit (2) after switching on of the supply voltage switches over to the normal operating state or to the standby operating state.

2. Electronic weighing machine according to claim 1, **characterised in that** the separate voltage supply is a chargeable energy store (20).

3. Electronic weighing machine according to claim 2, **characterised in that** the chargeable energy store (20) is a capacitor of high capacity.

4. Electronic weighing machine according to claim 2, **characterised in that** the chargeable energy store (2) is a chargeable battery.

5. Electronic weighing machine according to one of claims 2 to 4, **characterised in that** the chargeable energy store (20) is charged by the mains-fed voltage supply (5) not only during the normal operating state, but also during the standby operating state.

6. Electronic weighing machine according to one of claims 2 to 5, **characterised in that** a voltage monitoring circuit which monitors the charge state of the chargeable energy store (20) is additionally supplied by the separate energy store (20) and that the further operational state is interrupted for at least as long as the chargeable energy store (20) is sufficiently charged.

7. Electronic weighing machine according to claim 1, **characterised in that** the separate voltage supply consists of a rectifier circuit (31) with charging capacitor (30), which is connected with the two poles of the mains connection (10) by way of two capacitors (32).

8. Electronic weighing machine according to one of claims 1 to 7, **characterised in that** the mains switch (9) is a bistable switch.

9. Electronic weighing machine according to one of claims 1 to 8, **characterised in that** the clock module (22) contains a radio clock receiver.

10. Electronic weighing machine according to one of claims 1 to 9, **characterised in that** the clock module (22) is part of a microprocessor.

11. Electronic weighing machine according to one of claims 1 to 10, **characterised in that** the clock time can be preset by menu for automatic termination of the further operational state.

12. Electronic weighing machine according to one of claims 1 to 11, **characterised in that** a detector recognising the rest phases of the weighing machine is present within a digital signal processing unit (2), that memory means storing the time duration of the rest phases and the work phases are present, that computer programs which extrapolate the future rest and work phases from the stored rest and work phases are present and that before the beginning of an anticipated work phase the further operational state is automatically terminated and the standby operational state is switched on.

## Revendications

1. Balance électronique avec une unité de traitement de signaux numériques (2), avec une alimentation en courant sur secteur (5) se composant d'un transformateur (6) et d'un redresseur (7) monté en aval avec un condensateur de charge (8), avec un interrupteur d'alimentation (9) entre le transformateur (6) et le raccordement au réseau (10) et avec au moins deux états de fonctionnement, de sorte qu'à l'état de fonctionnement normal, tous les éléments constitutifs électroniques sont alimentés en tension, et qu'à l'état de fonctionnement de veille, les principaux éléments constitutifs générant de la chaleur sont mis en circuit, alors que les éléments constitutifs sensibles à l'usure et l'affichage (3) sont mis hors circuit, **caractérisée en ce que** l'interrupteur d'alimentation (9) est un interrupteur pouvant être actionné électriquement, **en ce qu'**une alimentation en courant (20, 30) séparée, indépendante de l'alimentation en courant sur secteur (5) existe, laquelle alimente en tension au moins un élément d'horlogerie (22), **en ce que** l'interrupteur d'alimentation (9) est connecté à l'élément d'horlogerie (22) via un câble (24), **en ce qu'**en plus de l'état de fonctionnement normal et de l'état de veille, un autre état de fonctionnement dénommé sleep-mode est prévu, l'élément d'horlogerie (22) appliquant une impulsion de coupure à l'interrupteur d'alimentation (9) via le câble (24) afin d'atteindre ce sleep-mode, de sorte que toute l'électronique, à l'exception de l'élément d'horlogerie (22), n'est plus alimentée en tension d'alimentation pendant le sleep-mode, et qu'après l'écoulement d'un laps de temps prédéfini ou bien à une heure prédéfinie, l'élément d'horlogerie (22) applique une impulsion au câble (24) et met à nouveau l'interrupteur d'alimentation (9) en circuit, et **en ce que** l'unité de traitement numérique (2), après la mise en circuit de la tension d'alimentation, commute pour passer à l'état de fonctionnement normal ou à l'état de fonctionnement de veille.

2. Balance électronique selon la revendication 1, **caractérisée en ce que** l'alimentation en courant séparée est un accumulateur d'énergie pouvant être chargé (20).

3. Balance électronique selon la revendication 2, **caractérisée en ce que** l'accumulateur d'énergie pouvant être chargé (20) est un condensateur de haute capacité.

4. Balance électronique selon la revendication 2, **caractérisée en ce que** l'accumulateur d'énergie pouvant être chargé (20) est une batterie pouvant être chargée.

5. Balance électronique selon l'une quelconque des revendications 2 à 4, **caractérisée en ce que** l'accumulateur d'énergie pouvant être chargé (20) est chargé par l'alimentation en courant sur secteur (5), tant pendant l'état de fonctionnement normal qu'également pendant l'état de fonctionnement de veille.

6. Balance électronique selon l'une quelconque des revendications 2 à 5, **caractérisée en ce que** grâce à l'accumulateur d'énergie séparé (20), un circuit de contrôle de tension est alimenté de manière supplémentaire, lequel surveille l'état de charge de l'accumulateur d'énergie pouvant être chargé (20), et **en ce que** l'autre état de fonctionnement est interrompu au moins pendant le temps nécessaire pour la charge suffisante de l'accumulateur d'énergie pouvant être chargé (20).

7. Balance électronique selon la revendication 1, **caractérisée en ce que** l'alimentation en courant séparée se compose d'un circuit redresseur (31) avec un condensateur de charge (30), lequel est raccordé via deux condensateurs (32) aux deux pôles du raccordement au réseau (10).

8. Balance électronique selon l'une quelconque des revendications 1 à 7, **caractérisée en ce que** l'interrupteur d'alimentation (9) est un interrupteur bistable.

9. Balance électronique selon l'une quelconque des revendications 1 à 8, **caractérisée en ce que** l'élément d'horlogerie (22) comprend un récepteur d'horloge radiopilotée.

10. Balance électronique selon l'une quelconque des revendications 1 à 9, **caractérisée en ce que** l'élément d'horlogerie (22) est une partie d'un microprocesseur.

11. Balance électronique selon l'une quelconque des revendications 1 à 10, **caractérisée en ce que** l'heure pour l'arrêt automatique de l'autre état de fonctionnement peut être prédéfinie via un menu.

12. Balance électronique selon l'une quelconque des revendications 1 à 11, **caractérisée en ce qu'**un détecteur se trouve à l'intérieur d'une unité de traitement de signaux numériques (2), lequel reconnaît des phases de repos de la balance, **en ce que** des moyens de mémorisation existent, lesquels gardent en mémoire la durée des phases de repos et des phases de travail, **en ce qu'**il existe des programmes de calcul, lesquels extrapolent les futures phases de repos et de travail à partir des phases de repos et de travail mémorisées, et **en ce qu'**avant le début d'une phase de travail à prévoir, l'autre état de fonctionnement se termine automatiquement et **en ce que** l'état de fonctionnement de veille est mis en marche.
